# FASCICULE DE BREVET EUROPEEN

(11) **EP 3 821 222 B1**
(45) Date de publication et mention de la délivrance du brevet: **31.07.2024**
(21) Numéro de dépôt: 19753161.9
(22) Date de dépôt: 15.07.2019
(51) Int. Cl.: G01M 5/00

(54) **PROCÉDÉ DE DÉTERMINATION D'UN RISQUE D'ENDOMMAGEMENT D'UNE STRUCTURE ET SYSTÈME ASSOCIÉ**
VERFAHREN ZUR BESTIMMUNG DES RISIKOS VON SCHÄDEN AN EINER STRUKTUR UND ZUGEHÖRIGES SYSTEM
METHOD FOR DETERMINING RISK OF DAMAGE TO A STRUCTURE AND ASSOCIATED SYSTEM

(30) Priorité: 13.07.2018 FR 1856501
(43) Date de publication de la demande: 19.05.2021
(73) Titulaire: SIGNAL-ACQUISITION-MESURE, 09340 Verniolle (FR)
(72) Inventeur: JUDENHERC, Sébastien, 09000 Vernajoul (FR); FRIGUI, Farouk, 65000 Tarbes (FR); DALVERNY, Olivier, 65310 Laloubère (FR)
(74) Mandataire: Plasseraud IP
(86) Numéro de dépôt international: PCT/FR2019/051772
(87) Numéro de publication internationale: WO 2020/012141

(56) Documents cités:
- WO-A1-2017/186306
- US-B2- 8 640 544
- ION SENSOR NEDERLAND BV: "LF-24 Low Frequency Velocity Sensor", 6 August 2014 (2014-08-06), XP055484031, Retrieved from the Internet <URL:https://www.iongeo.com/content/documents/Resource%20Center/Brochures%20and%20Data%20Sheets/Data%20Sheets/Sensor%20Geophones/DS_SEN_121032LF24.pdf> [retrieved on 20180613]

## Description

### Domaine technique :

L'invention concerne la surveillance de structures telles que des bâtiments, des barrages, des ponts ou des ouvrages d'art par exemple.

### Art antérieur :

Il est connu de mesurer les vibrations générées au sein des structures afin de surveiller et d'émettre un avis concernant l'état de la structure concernée.

Il est notamment connu de placer des capteurs de vibration sur des structures et de surveiller en temps réel l'amplitude des vibrations mesurées. Un signal d'alarme est alors généré lorsque les vibrations mesurées sur la structure sont trop importantes et pourraient entrainer un endommagement de la structure. Cependant, le signal d'alarme généré n'est pas forcément révélateur d'un endommagement.

Il existe par ailleurs d'autres systèmes de surveillance permettant d'enregistrer de manière continue les vibrations générées au sein des structures. L'analyse des données collectées permet de détecter si un endommagement a eu lieu et permet, dans certains cas, de localiser les endommagements. Pour se faire, les données collectées doivent être horodatées ou synchronisées. Un tel système de surveillance est par exemple installé sur la tour de L'Ophite à Lourdes et fait partie d'un réseau d'observation permanent. Le système comporte une pluralité d'accéléromètres reliés à un récepteur GPS permettant d'horodater les signaux de mesure. Les accéléromètres étant reliés au récepteur GPS par des câbles, l'installation d'un tel système de surveillance n'est pas aisée. De plus, un tel système est relativement coûteux en raison de la présence d'accéléromètres de qualité scientifique et du récepteur GPS notamment. Par ailleurs, de tels systèmes ne sont pas adaptés pour le traitement des données en temps réel. Un autre procédé d'analyse de la sécurité d'une structure est par exemple connue du document US 8 640 544 B2.

### Objet et résumé de l'invention :

La présente invention vise notamment à pallier les inconvénients de l'art antérieur précités.

En particulier, un but de l'invention est de fournir un système permettant de détecter un risque d'endommagement en temps réel sur une structure.

Un autre but de l'invention est de fournir un système facile à installer et moins coûteux.

Un autre but de l'invention est de simplifier le traitement des données collectées et de minimiser la puissance de calcul nécessaire et le volume de données à transmettre.

A cet effet, la présente invention propose, selon un premier aspect, un procédé de détermination d'un risque d'endommagement d'une structure, selon la revendication 1. Le procédé étant mis en oeuvre par un système comprenant au moins un capteur adapté pour acquérir des mesures de vibrations de la structure et une unité de traitement, et comportant les étapes suivantes :
- la sélection, parmi une pluralité d'échantillons acquis pendant une durée déterminée, d'un échantillon sélectionné représentatif de l'état de la structure, selon un critère de moindre énergie, l'échantillon sélectionné présentant une énergie plus faible que celle des autres échantillons de la pluralité d'échantillons,
- le calcul du module de la transformée de Fourier de l'échantillon sélectionné,
- la décomposition du module de la transformée de Fourier de l'échantillon sélectionné en un ensemble de fonctions représentatives de pics de fréquences de plus haute amplitude, chaque fonction représentative ayant une fréquence centrale,
- la détection d'un risque d'endommagement de la structure lorsque la fréquence centrale de l'une des fonctions représentatives correspond à l'une des fréquences propres de la structure et présente une variation de fréquence avec une valeur supérieure à un seuil prédéterminé, de préférence pendant une durée déterminée.

Les étapes ci-dessus ne sont pas nécessairement réalisées de manière séquentielle mais peuvent être réalisées en parallèle.

On notera que le « critère de moindre énergie » s'applique aussi bien dans le domaine temporel que dans le domaine fréquentiel et permet de sélectionner un échantillon comportant le moins de signaux parasites parmi la pluralité d'échantillons acquis. L'énergie peut être calculée par le biais d'une intégrale d'un signal temporel ou fréquentiel d'un échantillon de données acquises par au moins un capteur de vibrations. De manière usuelle, il peut s'agit d'une intégrale d'un signal temporel ou fréquentiel, et plus particulièrement d'un signal représentatif du module de la transformée de Fourier de l'échantillon. Il peut également s'agir d'une mesure de variation statistique des valeurs temporelles de l'échantillon étant entendu qu'un échantillon présentant un écart type minimal présente également une énergie minimale.

Dans un mode de réalisation, les fonctions représentatives sont des fonctions gaussiennes.

Dans un mode de réalisation, l'étape de sélection d'un échantillon représentatif de l'état de la structure comprend, pour chaque échantillon acquis pendant la durée prédéterminée, le calcul du module de la transformée de Fourier de chaque échantillon acquis, l'intégration d'un signal représentatif du module de la transformée de Fourier sur une bande de fréquence prédéterminée et la sélection de l'échantillon pour lequel l'intégrale dudit signal est minimale.

Dans un mode de réalisation préféré, le signal représentatif du module de la transformée de Fourier de l'échantillon est la densité spectrale de puissance.

Dans un mode de réalisation, le calcul d'un signal représentatif du module de la transformée de Fourier de l'échantillon comprend :
- le calcul de la transformée de Fourier de l'échantillon, et
- le calcul de la densité spectrale de puissance à l'aide du module de la transformée de Fourier de l'échantillon.

Dans un mode de réalisation, le procédé comprend en outre une étape de d'identification des fréquences propres de la structure à partir de l'ensemble des fonctions représentatives des pics de fréquence de plus haute amplitude.

Dans un mode de réalisation, le procédé comprend en outre une étape de calcul des fréquences propres de la structure à partir de l'ensemble des fonctions représentatives des pics de fréquence de plus haute amplitude. Dans un mode de réalisation, le procédé comprend en outre une étape de transmission à une unité de calcul à distance d'au moins la fréquence centrale de chaque fonction représentative de pics de fréquences de plus haute amplitude et l'étape de détection d'un risque d'endommagement de la structure est mise en oeuvre par l'unité de calcul à distance.

Dans un mode de réalisation, le capteur est adapté pour mesurer des vibrations de la structure selon au moins une direction de détection.

Dans un mode de réalisation, le capteur comprend au moins un géophone adapté pour acquérir des mesures de vitesses de vibration de la structure selon une direction déterminée.

Dans un mode de réalisation, le capteur comprend au moins deux géophones adaptés pour acquérir des mesures de vitesses de vibration de la structure selon une première et une seconde direction, respectivement, les deux géophones étant positionnés de sorte que les premières et secondes directions soient perpendiculaires.

Dans un mode de réalisation, le procédé comprend en outre la mémorisation, dans une mémoire distante, d'un indicateur du risque d'endommagement de la structure.

Dans un mode de réalisation, le procédé comprend en outre l'envoi d'un indicateur du risque d'endommagement à un terminal d'un utilisateur.

La présente invention propose, selon un second aspect, un produit programme d'ordinateur lorsqu'il est mis en oeuvre par un calculateur, au moins des instructions de code pour la mise en oeuvre d'un procédé selon l'une quelconque des revendications 1 à 6.

Enfin, selon un troisième aspect, la présente invention propose un système de détection d'un risque d'endommagement d'une structure comprenant :
- au moins un capteur adapté pour acquérir une pluralité d'échantillons de mesures de vibration de la structure,
- une unité de traitement configurée pour mettre en oeuvre le procédé selon l'une quelconque des revendications 1 à 6.

Dans un mode de réalisation, l'unité de traitement comprend :
- une première et une seconde unité de calcul, la seconde unité de calcul étant une unité de calcul distante,
- la première unité de calcul étant configurée pour:
   ∘ sélectionner, parmi la pluralité d'échantillons acquis pendant la durée déterminée, d'un échantillon sélectionné représentatif de l'état de la structure, selon un critère de moindre énergie, l'échantillon sélectionné présentant une énergie plus faible que celle des autres échantillons de la pluralité d'échantillons,
   ∘ calculer le module de la transformée de Fourier de l'échantillon sélectionné,
   ∘ décomposer le module de la transformée de Fourier de l'échantillon sélectionné en un ensemble de fonctions représentatives de pics de fréquences de plus haute amplitude, chaque fonction représentative ayant une fréquence centrale,
   ∘ transmettre au moins la fréquence centrale de chaque fonction représentative de pics de fréquences de plus haute amplitude de l'ensemble, pour chaque échantillon sélectionné,
- la deuxième unité de calcul distante étant configurée pour :
   ∘ recevoir au moins la fréquence centrale de chaque fonction représentative de pics de fréquence de plus haute amplitude de l'ensemble, pour chaque échantillon sélectionné,
   o détecter un risque d'endommagement de la structure lorsque la fréquence centrale de l'une des fonctions représentatives correspond à l'une des fréquences propres de la structure et présente une variation de fréquence avec une valeur supérieure à un seuil prédéterminé, de préférence pendant une durée déterminée.

La présente invention présente de nombreux avantages. D'une part, les données mesurées ne nécessitent pas d'être synchronisées ou horodatées par un signal GPS. Les données mesurées par les différents capteurs peuvent donc être transmises à l'aide d'un protocole de communications sans fil et les capteurs sont donc plus faciles à installer. D'autre part, les données gardées en mémoire et/ou transmises sont minimisées et les temps de calcul limités, notamment par la sélection des échantillons de moindre énergie, la décomposition du module de la transformée de Fourier de chaque échantillon sélectionné en une pluralité de fonctions représentatives des pics de plus haute amplitude et la transmission, le cas échéant, des paramètres de ces fonctions à une unité de calcul à distance. Il est ainsi possible de réaliser des systèmes à moindre coût fonctionnant en temps réel. Le coût peut également être réduit par l'utilisation d'un ou plusieurs géophones comprenant une unité de traitement adaptée pour égaliser la réponse fréquentielle du géophone bas coût utilisé. Par ailleurs, il est également possible de dater des modifications intervenues dans la structure, notamment suite à des travaux, en consultant l'historique de l'indicateur de risque d'endommagement. Il est donc possible également d'en identifier la cause.

### Brève description des dessins :

Des détails et avantages de la présente invention apparaitront mieux de la description qui suit, faite en référence aux dessins annexés sur lesquels :
La figure 1 représente un procédé de détection d'un risque d'endommagement selon un mode de réalisation de l'invention,
La figure 2 représente un système de détection d'un risque d'endommagement selon un mode de réalisation de l'invention.

### Description détaillée d'un mode de réalisation de l'invention :

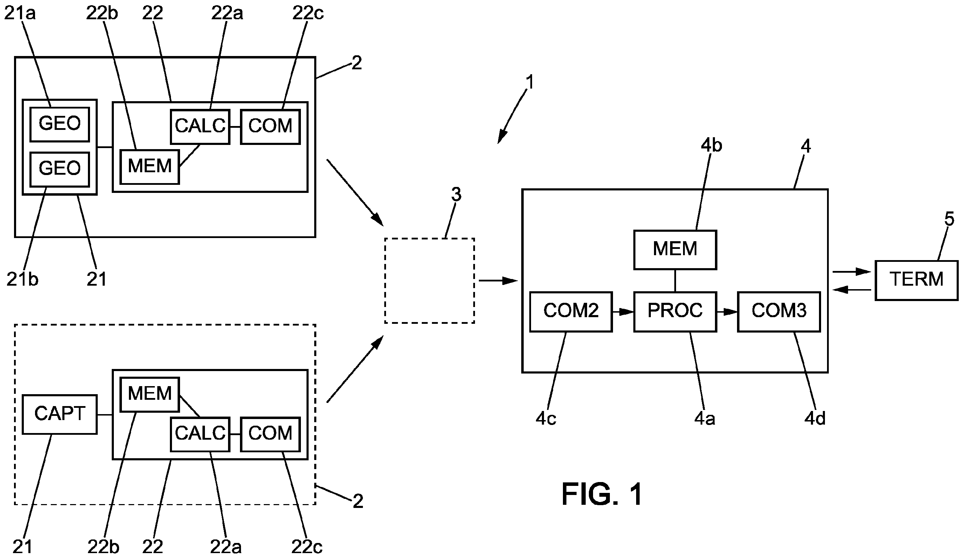

La figure 1 représente un système de détection d'endommagement selon un mode de réalisation selon l'invention.

Le système de détection d'endommagement 1 comprend au moins une unité d'acquisition 2 et une unité de calcul distante 4.

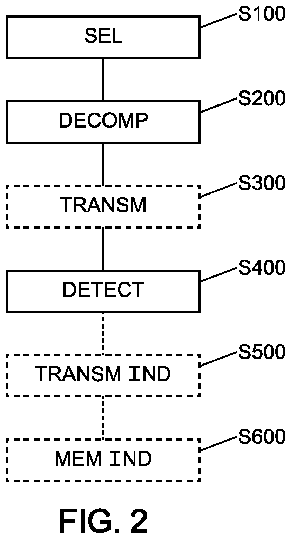

L'unité d'acquisition 2 comprend un capteur 21 adapté pour détecter des vibrations d'une structure sur laquelle il est placé et une unité de calcul 22. L'unité de calcul 22 est configurée pour sélectionner, à partir des échantillons acquis par le capteur 21, un échantillon représentatif de la structure, à décomposer cet échantillon en un ensemble de fonctions représentatives des pics de fréquence de plus haute amplitude et à transmettre des données relatives aux fonctions représentatives des pics de fréquence de plus haute amplitude à l'unité de calcul distante 4 via l'interface de communication 22c en exécutant les étapes S100 à S300 décrites en référence à la figure 2 décrite ci-après. L'unité de calcul 22 comprend un calculateur 22a, une mémoire 22b apte à stocker des instructions destinées à être mises en oeuvre par le calculateur et une interface de communication 22c. Le calculateur 22a peut être un microcontrôleur, un processeur ou un microprocesseur. L'unité de calcul 22 est reliée au capteur 21 et peut être apte à commander l'acquisition des mesures de vibration par le capteur et à recevoir ces mesures de vibration. Si nécessaire, l'unité de calcul 22 peut également comprendre un convertisseur analogique numérique, si les mesures de vibrations faites par le capteur sont analogiques. Le convertisseur analogique numérique peut par exemple être intégré dans le microcontrôleur.

L'unité de calcul distante 4 comprend un calculateur 4a, par exemple un processeur, une mémoire distante 4b comprenant des instructions destinées à être exécutées par le calculateur et une interface de communication 4c. L'interface de communication 4c est apte à recevoir les données relatives aux fonctions représentatives des pics de fréquence de plus haute amplitude de chaque échantillon sélectionné. L'unité de calcul distante 4 est configurée pour détecter un risque d'endommagement à partir des données reçues via son interface de communication 4c en exécutant les étapes S400 à S600 décrites en référence à la figure 2. En particulier, l'unité de calcul distante 4 est capable de détecter un risque d'endommagement à partir d'une variation de fréquence centrale de l'une des fonctions représentatives de plus haute fréquence et de mettre à jour un indicateur du risque d'endommagement de la structure.

En outre, l'unité de calcul distante 4 comprend une interface 4d apte à communiquer avec le terminal 5 d'un utilisateur, tel un ordinateur, un téléphone intelligent, une tablette ou un serveur de données. L'unité de calcul 4 peut envoyer périodiquement l'indicateur de risque d'endommagement au terminal 5 de l'utilisateur, par le biais d'un SMS par exemple si le terminal est un téléphone intelligent ou envoyer toute mise à jour de l'indicateur uniquement. L'unité de calcul 4 peut aussi permettre l'accès à distance, via internet par exemple, aux données stockées dans la mémoire 4b via le terminal 5 de l'utilisateur. La mémoire 4b peut donc comprendre également, ou de manière alternative, un historique des données collectées et de l'état de l'indicateur.

Dans le mode de réalisation décrit ici, on notera que le système 1 ne comprend qu'une seule unité d'acquisition 2. Dans d'autres modes de réalisation, le système 1 peut comprendre plusieurs unités d'acquisition présentes sur la structure semblables à celles décrites précédemment. Les données relatives aux fonctions représentatives des pics de fréquence de plus haute amplitude de chaque unité d'acquisition 2 peuvent être directement transmises à l'unité de calcul distante 4. Alternativement, ces données peuvent être collectées par l'intermédiaire d'un module intermédiaire 3 configuré pour communiquer avec les unités d'acquisition 2 selon un premier protocole tel que LORA^{®} ou SIGFOX^{®}, par exemple, et envoyer de manière centralisée les données des différentes unités d'acquisition avec ou sans pré-traitement à l'unité de calcul à distance 4 via un autre protocole par exemple. Le module intermédiaire 3 comprend donc deux interfaces de communication, l'une étant configurée pour communiquer avec les unités d'acquisitions et l'autre étant configurée pour communiquer avec l'unité de traitement à distance, par internet par exemple.

De manière avantageuse, le capteur 21 est adapté pour mesurer des vibrations de la structure sur laquelle ils sont placés selon au moins une direction. Il peut s'agir, par exemple, d'un ou plusieurs capteurs piezzoélectriques aptes à mesurer des déplacements, d'un ou plusieurs géophones aptes à mesurer des vitesses ou d'accéléromètres aptes à mesurer des accélérations. Le capteur 21 est adapté pour mesurer les vibrations de la structure selon au moins une direction de détection. En effet, lorsque la direction de l'un des modes de résonance de la structure est connu ou facilement déterminable, il est possible d'utiliser un capteur dont la direction de détection est orientée selon l'un des modes de résonance de la structure.

En revanche, lorsque les modes de résonance ne sont pas connus ou difficilement identifiables, le capteur 21 comporte d'autres directions de détection, les directions de détection étant de préférence perpendiculaires entre elles. On s'assure ainsi que des signaux représentatifs de vibrations de la structure peuvent être mesurés sans qu'il soit porté attention à l'orientation des modes de résonance de la structure.

Dans un mode de réalisation préféré, le capteur 21 comporte deux géophones 21a, 21b, chaque géophone étant adapté pour acquérir les vitesses de vibration de la structure selon une direction de détection. Avantageusement, les deux géophones sont positionnés de sorte que leurs directions de détection respectives sont orthogonales. Cette configuration est particulièrement avantageuse, puisque la plupart des structures considérées telles que les bâtiments et les barrages, par exemple, présentant deux axes de symétrie auxquels on peut associer deux types de modes de résonances distincts orientés dans un même plan.

L'utilisation de géophones est particulièrement avantageuse car ceux-ci sont adaptés pour mesurer des vitesses de vibration présentant des fréquences comprises en 0,2 et 20 Hz, préférentiellement comprises entre 1Hz et 15Hz, par exemple à moindre coût. Il existe en particulier des géophones reliés à des unités de traitement aptes à élargir et à égaliser la réponse spectrale du géophone bas coût utilisé. Un exemple d'un géophone relié à une unité de traitement numérique est décrit par exemple dans la demande FR1759513. L'unité de traitement du géophone peut donc être configurée pour réaliser les étapes S 100 à S200 décrites précédemment.

Dans un autre mode de réalisation, les étapes réalisées par l'unité de calcul à distance sont réalisées directement par l'unité d'acquisition. Le système 1 ne comprend alors que des unités d'acquisition comprenant chacune un capteur et une unité de traitement mettant en oeuvre les étapes S100, S200 et S400 et optionnellement les étapes S500 et S600.

La figure 2 représente un procédé de détection d'un risque d'endommagement selon un mode de réalisation de l'invention.

Le procédé comprend une étape S100 de sélection, parmi une pluralité d'échantillons acquis pendant une durée déterminée, d'un échantillon représentatif de l'état de la structure, une étape S200 de décomposition du module de la transformée de Fourier de l'échantillon sélectionné en un ensemble de fonctions représentatives de pics de fréquences de plus haute amplitude, chaque fonction représentative ayant une fréquence centrale et une étape S400 de détection d'un risque d'endommagement de la structure lorsque la fréquence centrale de l'une des fonctions représentatives correspond à l'une des fréquences propres de la structure et varie avec une valeur supérieure à un seuil prédéterminé, de préférence pendant une durée déterminée.

En outre, le procédé peut comprendre de manière optionnelle, lorsqu'il est mis en oeuvre par un système comprenant une unité de calcul à distance tel que décrit par exemple en référence à la Figure 1, une étape S300 de transmission à une unité de calcul à distance d'au moins la fréquence centrale de chaque fonction représentative de pics de fréquences de plus haute amplitude.
- Dans un mode de réalisation, l'étape S100 de sélection, parmi une pluralité d'échantillons acquis pendant une durée déterminée, d'un échantillon représentatif de l'état de la structure, selon un critère de moindre énergie comprend les sous-étapes suivantes :acquisition d'une pluralité d'échantillons pendant une durée déterminée,
- calcul pour chaque échantillon de l'écart type sur l'ensemble des points de mesure présents dans l'échantillon,
- sélection de l'échantillon présentant l'écart type minimal.

Dans un autre mode de réalisation, l'étape S100 de sélection, parmi une pluralité d'échantillons acquis pendant une durée déterminée, d'un échantillon représentatif de l'état de la structure, selon un critère de moindre énergie comprend les sous-étapes suivantes :
- acquisition d'une pluralité d'échantillons pendant une durée déterminée,
- calcul, pour chaque échantillon, du module de la Transformée de Fourier, et de la densité spectrale de puissance, la densité spectrale de puissance étant définie comme le rapport du module de la transformée de Fourier au carré sur le temps d'acquisition de l'échantillon,
- intégration, pour chaque échantillon, de la densité spectrale de puissance sur la bande de fréquence considérée pour déterminer la densité spectrale de puissance globale,
- sélection de l'échantillon présentant la densité spectrale de puissance globale minimale.

L'étape de sélection de l'échantillon présentant la moindre énergie permet de sélectionner un échantillon présentant le moins de vibrations parasites, i.e. instables, pendant la durée considérée pour la sélection. L'échantillon sélectionné présentant la moindre énergie est donc le plus représentatif de l'état de la structure pour la durée considérée. L'échantillon comprend en effet des vibrations correspondant à des modes de vibration de la structure et d'autres vibrations dues, par exemple, au déclenchement d'une pompe sur un barrage. Si cette pompe est actionnée de manière périodique sur une durée déterminée, il est possible de sélectionner un échantillon ne présentant pas de vibrations liées au fonctionnement de la pompe, en choisissant l'échantillon présentant la moindre énergie parmi les échantillons mesurés sur une durée supérieure à la durée d'actionnement de la pompe. Cette étape de sélection permet de filtrer les vibrations parasites temporaires sur la durée considérée. La méthode se basant sur le calcul du module de la transformée de Fourier est plus performant car il prend en compte les différentes composantes fréquentielles de l'échantillon et permet de sélectionner l'échantillon qui présente le moins de vibrations parasites lors de la durée considérée lors de l'étape de sélection S100. La sélection d'un échantillon sélectionné présentant la moindre énergie, c'est-à-dire dont l'énergie est inférieure à celle des autres échantillons considérés pendant la durée déterminée permet de limiter le volume de données à traiter et à transmettre. Ensuite, le module de la transformée de Fourier de l'échantillon sélectionné est décomposé en un ensemble de fonctions représentatives de pics de fréquences de plus haute amplitude lors de l'étape S200.

L'étape S200 comprend :
- Une sous-étape de détection du pic de plus haute amplitude du module de la transformée de Fourier courante de l'échantillon sélectionné,
- Une sous-étape de détermination de la fonction représentative du pic de fréquence de plus haute amplitude, la fonction représentative étant une fonction de répartition statistique comme une gaussienne par exemple,
- Une sous-étape de stockage en mémoire d'au moins la fréquence centrale de la fonction représentative correspondante. D'autres paramètres représentatifs de la fonction représentative tels que la largeur et l'amplitude de la gaussienne, par exemple peuvent également être stockés,
- Une sous-étape de soustraction de la fonction représentative du module de la transformée de Fourier courante et d'actualisation du module de la transformée de Fourier courante.

Ces sous-étapes sont réitérées un nombre prédéterminé de fois jusqu'à obtenir un nombre prédéterminé de fonctions représentatives de pics de fréquence de plus haute amplitude.

Par ailleurs, lorsque l'étape 5100 de sélection se fait sur la base de l'écart type de l'échantillon temporel, l'étape S200 de décomposition peut comprendre une sous-étape préliminaire lors de laquelle on calcule le module de la Transformée de Fourier de l'échantillon sélectionné.

Lorsque l'étape S100 de sélection se fait sur la base du module de la Transformée de Fourier, le module de la transformée de Fourier de l'échantillon sélectionné correspond, lors de la première itération à celle calculée lors de l'étape S100.

Dans un mode de réalisation, lorsque le procédé est mis en oeuvre par un système comprenant une unité de calcul à distance, le procédé comprend une étape S300 de transmission à une unité de calcul à distance d'au moins la fréquence centrale de chaque fonction représentative de pics de fréquences de plus haute amplitude est mise en oeuvre. Pour certains échantillons, d'autres paramètres de la fonction représentative peuvent être transmis. Il est alors possible de reconstituer, à partir de ces paramètres, les différents points de mesure temporels de l'échantillon et de calculer les fréquences propres des modes de résonance de la structure tel que décrit ci-après. La transmission de la fréquence centrale de chaque fonction représentative et éventuellement la transmission d'autres paramètres de la fonction représentative permet de limiter le volume de données à transmettre à l'unité de calcul à distance.

Enfin, l'étape S400 de détection d'un risque d'endommagement de la structure lorsque la fréquence centrale de l'une des fonctions représentatives correspond à l'une des fréquences propres de la structure et varie avec une valeur supérieure à un seuil prédéterminé, de préférence pendant une durée déterminée comprend, dans un mode de réalisation :
- La sélection d'une bande de fréquence choisie de sorte que seuls des pics de fréquence correspondant à des modes de résonance de la structure sont présents dans ladite bande de fréquence,
- le calcul de la valeur absolue de la différence entre une fréquence centrale initiale et la fréquence centrale courante pour au moins l'une des fonctions représentatives présentes dans la bande de fréquence choisie,
- la détection d'un risque d'endommagement lorsque ladite valeur absolue est supérieure à un seuil prédéterminé pour au moins l'une des fonctions représentatives.

Dans un autre mode de réalisation, la sélection d'une bande de fréquence choisie de sorte que seuls des pics de fréquence correspondant à des modes de résonance de la structure sont présents dans ladite bande de fréquence peut être faite dès l'étape S200 de décomposition afin de ne décomposer qu'une partie du module de la transformée de Fourier comprenant des fréquences propres et exemptes de pics parasites. L'étape S400 comprend alors :
- le calcul de la valeur absolue de la différence entre une fréquence centrale initiale et la fréquence centrale courante pour au moins l'une des fonctions représentatives déterminées lors de l'étape S200,
- la détection d'un risque d'endommagement lorsque ladite valeur absolue est supérieure à un seuil prédéterminé pour au moins l'une des fonctions représentatives.

De manière avantageuse, le seuil prédéterminé est fixé de telle sorte que les variations climatiques sur la variation de la fréquence propre ne sont pas prises en compte. Le seuil prédéterminé est donc choisi de manière à être supérieur aux variations de fréquence propre induites par les variations climatiques. En effet, les variations climatiques induisent une variation du taux d'humidité dans le béton et ont de ce fait une influence sur la fréquence propre des modes de résonance de la structure. Un seuil différent peut être utilisé en fonction du mode de résonance et donc de la fréquence de résonance considérée.

Selon une variante, l'étape S400 de détection d'un risque d'endommagement de la structure comprend la détection d'un risque d'endommagement lorsque ladite valeur absolue est supérieure à un seuil prédéterminé pour au moins l'une des fonctions représentatives pendant une durée déterminée. On évite ainsi que des variations de la fréquence centrale dues à des évènements exceptionnels mais transitoires tels une tempête soient pris en compte. La durée déterminée peut être par exemple de 3 à 4 jours, des tempêtes durant rarement plus longtemps.

Dans un mode de réalisation, la sous-étape de sélection d'une bande de fréquence comprend le calcul des fréquences propres des modes de résonance de la structure.

Dans un mode de réalisation, les fréquences propres de résonance sont par exemple calculées à partir d'un échantillon temporel acquis par le capteur à l'aide de la méthode stochastique par sous-ensemble dite SSI-COV décrite par exemple dans le document suivant : « An algorithm for damage détection and localization using output-only response for civil engineering structures subjected to seismic excitations », F Frigui, J-P Faye, C. Martin, O. Dalverny, F. Peres, S. Judenherc, Proceedings of the 7th International Conférence on Mechanics and Materials in Design, Albufeira/Portugal 11-15 June 2017. D'autres méthodes connues de l'homme de l'art peuvent également être utilisées.

Dans un mode de réalisation préféré, de manière surprenante, l'échantillon temporel reconstitué à l'aide des paramètres des fonctions représentatives est utilisé pour calculer les fréquences propres de résonance. On utilise alors les paramètres transmis lors de l'étape 5300 à l'unité de calcul à distance comprenant les fréquences centrales et optionnellement les amplitudes des fonctions représentatives de plus grande amplitude calculées lors de l'étape S200. Lorsque l'échantillon est décomposé en un nombre suffisant de fonctions représentatives, l'échantillon reconstitué est suffisamment pertinent. Les inventeurs ont démontré qu'une décomposition en 16 fonctions représentatives était suffisante. L'échantillon temporel reconstitué est pourtant différent de celui mesuré puisqu'il est reconstitué uniquement à l'aide du module de la transformée de Fourier. La phase de la transformée de Fourier n'est pas utilisée. Il est ainsi possible de réduire le temps de calcul et l'espace de stockage nécessaire dans le système mettant en oeuvre le procédé. Les échantillons temporels ne sont en effet stockés en mémoire que pendant le calcul du module de la Transformée de Fourier. Des composants moins coûteux peuvent donc être utilisés.

Dans un mode de réalisation alternatif, l'étape S400 comprend :
- l'identification d'au moins une fréquence centrale correspondant à une fréquence propre de résonance de la structure,
- le suivi de la variation d'au moins une fréquence propre identifiée par exemple par le calcul de la valeur absolue de la différence entre une fréquence initiale et la fréquence courante correspondante,
- la détection d'un risque d'endommagement lorsque ladite valeur absolue est supérieure à un seuil prédéterminé pour au moins l'une des fréquences propres identifiées.

L'identification des fréquences centrales correspondant à des fréquences propres de la structure est obtenues par une étape d'analyse modale opérationnelle à partir d'un échantillon temporel reconstitué à l'aide de la méthode SSI-COV décrite précédemment puis par l'étude d'un diagramme de stabilité tel que décrit par exemple dans les sections 2.1 ou 2.2 du document « Stabilization diagrams to distinguish physical modes and spurious modes for structural parameter identification », Wu, C., Liu, H., Qin, X., & Wang, J., Journal of Vibroengineering, Vol.19, Issue 4, 2017, pages 2777-2794. Cette méthode est particulièrement efficace pour distinguer les fréquences propres des fréquences parasites telles que les fréquences de vibration liées à l'utilisation d'une pompe, d'un climatiseur, ou d'autres fréquences électriques telles que des harmoniques de l'alimentation secteur à 50Hz ou des "idle-tones" des convertisseurs de puissance de technologie sigma-delta ou des fréquences parasites apparaissant lors de conversion de signaux analogiques en signaux numériques. De manière optionnelle, le procédé comprend en outre une étape S500 d'envoi d'un indicateur du risque d'endommagement à un terminal d'un utilisateur. Cet indicateur peut par exemple être envoyé par SMS sur un téléphone mobile de l'utilisateur par exemple.

De manière optionnelle, le procédé comprend en outre une étape S600 de mémorisation, dans une mémoire distante, d'un indicateur du risque d'endommagement de la structure et un historique des données collectées pour les échantillons sélectionnés. Cette mémoire distante étant accessible à distance, l'utilisateur peut consulter un historique du risque d'endommagement de la structure par exemple.

De manière avantageuse, le procédé décrit ci-dessus est mis en oeuvre par au moins une unité d'acquisition du système comprenant un capteur et pour chaque direction de détection mesurée par le capteur. Selon un mode de réalisation, il suffit de détecter une variation de la fréquence centrale de l'une des fonctions représentatives correspondant à l'une des fréquences propres de la structure supérieure à un seuil prédéterminé sur une direction de détection.

## Revendications

1. Procédé de détermination d'un risque d'endommagement d'une structure, le procédé étant mis en oeuvre par un système comprenant au moins un capteur adapté pour acquérir des mesures de vibrations de la structure et une unité de traitement, et comportant les étapes suivantes :
• la sélection (S100), parmi une pluralité d'échantillons acquis pendant une durée déterminée, d'un échantillon sélectionné représentatif de l'état de la structure, selon un critère de moindre énergie, l'échantillon sélectionné présentant une énergie plus faible que celle des autres échantillons de la pluralité d'échantillons,
• le calcul du module de la transformée de Fourier de l'échantillon sélectionné,
• la décomposition (S200) du module de la transformée de Fourier de l'échantillon sélectionné en un ensemble de fonctions représentatives de pics de fréquences de plus haute amplitude, chaque fonction représentative ayant une fréquence centrale,
• la détection (S400) d'un risque d'endommagement de la structure lorsque la fréquence centrale de l'une des fonctions représentatives correspond à l'une des fréquences propres de la structure et présente une variation de fréquence avec une valeur supérieure à un seuil prédéterminé, de préférence pendant une durée déterminée.

2. Procédé selon la revendication 1, dans lequel les fonctions représentatives sont des fonctions gaussiennes.

3. Procédé selon l'une des revendications précédentes, dans lequel l'étape de sélection d'un échantillon représentatif de l'état de la structure comprend, pour chaque échantillon acquis pendant la durée prédéterminée, le calcul du module de la transformée de Fourier de chaque échantillon acquis, l'intégration d'un signal représentatif du module de la transformée de Fourier sur une bande de fréquence prédéterminée et la sélection de l'échantillon pour lequel l'intégrale dudit signal est minimale.

4. Procédé selon l'une des revendications précédentes, dans lequel le procédé comprend en outre une étape de calcul des fréquences propres de la structure à partir de l'ensemble des fonctions représentatives des pics de fréquence de plus haute amplitude.

5. Procédé selon l'une des revendications précédentes, dans lequel le procédé comprend en outre une étape de transmission (S300) à une unité de calcul à distance d'au moins la fréquence centrale de chaque fonction représentative de pics de fréquences de plus haute amplitude et l'étape de détection d'un risque d'endommagement de la structure est mise en oeuvre par l'unité de calcul à distance.

6. Procédé selon l'une des revendications précédentes, dans lequel le capteur comprend au moins deux géophones adaptés pour acquérir des mesures de vitesses de vibration de la structure selon une première et une seconde direction, respectivement, les deux géophones étant positionnés de sorte que les premières et secondes directions soient perpendiculaires.

7. Produit programme d'ordinateur comprenant, lorsqu'il est mis en oeuvre par au moins un calculateur (22a, 4a), des instructions de code pour la mise en oeuvre d'un procédé selon l'une quelconque des revendications précédentes.

8. Système de détection d'un risque d'endommagement d'une structure (1) comprenant :
• au moins un capteur (21) adapté pour acquérir une pluralité d'échantillons de mesures de vibration de la structure,
• une unité de traitement (22, 3, 4) configurée pour mettre en oeuvre le procédé selon l'une quelconque des revendications 1 à 6.

9. Système selon la revendication 8, dans lequel l'unité de traitement (22, 3, 4) comprend :
• une première (22) et une seconde unité de calcul (4), la seconde unité de calcul (4) étant une unité de calcul distante,
• la première unité de calcul (22) étant configurée pour:
• sélectionner, parmi la pluralité d'échantillons acquis pendant la durée déterminée, d'un échantillon sélectionné représentatif de l'état de la structure, selon un critère de moindre énergie, l'échantillon sélectionné présentant une énergie plus faible que celle des autres échantillons de la pluralité d'échantillons,
o calculer le module de la transformée de Fourier de l'échantillon sélectionné,
∘ décomposer le module de la transformée de Fourier de l'échantillon sélectionné en un ensemble de fonctions représentatives de pics de fréquences de plus haute amplitude, chaque fonction représentative ayant une fréquence centrale,
o transmettre au moins la fréquence centrale de chaque fonction représentative de pics de fréquences de plus haute amplitude de l'ensemble, pour chaque échantillon sélectionné,
• la deuxième unité de calcul distante (4) étant configurée pour :
∘ recevoir au moins la fréquence centrale de chaque fonction représentative de pics de fréquence de plus haute amplitude de l'ensemble, pour chaque échantillon sélectionné,
o détecter un risque d'endommagement de la structure lorsque la fréquence centrale de l'une des fonctions représentatives correspond à l'une des fréquences propres de la structure et présente une variation de fréquence avec une valeur supérieure à un seuil prédéterminé, de préférence pendant une durée déterminée.

## Patentansprüche

1. Verfahren zur Bestimmung eines Risikos der Beschädigung einer Struktur, wobei das Verfahren von einem System durchgeführt wird, umfassend wenigstens einen Sensor, der dazu ausgebildet ist, Schwingungsmessungen der Struktur zu erfassen, eine Verarbeitungseinheit, sowie die folgenden Schritte:
• Auswahl (S100) einer ausgewählten Probe, die für den Zustand der Struktur repräsentativ ist, aus einer Vielzahl von Proben, die während einer bestimmten Zeitdauer erfasst wurden, nach einem Kriterium der geringsten Energie, wobei die ausgewählte Probe eine geringere Energie aufweist als die anderen Proben der Vielzahl von Proben,
• Berechnen des Fourier-Transformationsmoduls der ausgewählten Probe,
• Zerlegen (S200) des Fourier-Transformationsmoduls der ausgewählten Probe in einen Satz von Funktionen, die für Frequenzspitzen höchster Amplitude repräsentativ sind, wobei jede repräsentative Funktion eine Mittenfrequenz hat,
• Erkennen (S400) eines Risikos einer Beschädigung der Struktur, wenn die Mittenfrequenz einer der repräsentativen Funktionen einer der Eigenfrequenzen der Struktur entspricht und eine Frequenzänderung mit einem Wert oberhalb eines vorbestimmten Schwellenwerts aufweist, bevorzugt während einer bestimmten Dauer.

2. Verfahren nach Anspruch 1, wobei die repräsentativen Funktionen Gaußsche Funktionen sind.

3. Verfahren nach einem der vorhergehenden Ansprüche, wobei der Schritt des Auswählens einer für den Zustand der Struktur repräsentativen Probe für jede während der vorbestimmten Dauer erfasste Probe das Berechnen des Fourier-Transformationsmoduls jeder erfassten Probe, das Integrieren eines für das Fourier-Transformationsmodul repräsentativen Signals über ein vorbestimmtes Frequenzband und das Auswählen der Probe, für die das Integral des Signals minimal ist, umfasst.

4. Verfahren nach einem der vorhergehenden Ansprüche, wobei das Verfahren ferner einen Schritt umfasst, bei dem die Eigenfrequenzen der Struktur aus der Gesamtheit der Funktionen berechnet werden, die für die Frequenzspitzen höchster Amplitude repräsentativ sind.

5. Verfahren nach einem der vorhergehenden Ansprüche, wobei das Verfahren ferner einen Schritt des Übertragens (S300) wenigstens der Mittenfrequenz jeder Funktion, die repräsentativ für Frequenzspitzen höchster Amplitude ist, an eine Fernberechnungseinheit umfasst und der Schritt des Erfassens eines Risikos einer Beschädigung der Struktur durch die Fernberechnungseinheit durchgeführt wird.

6. Verfahren nach einem der vorhergehenden Ansprüche, wobei der Sensor wenigstens zwei Geophone umfasst, die dazu ausgebildet sind, Messungen von Schwingungsgeschwindigkeiten der Struktur in einer ersten bzw. zweiten Richtung zu erfassen, wobei die beiden Geophone so positioniert sind, dass die erste und die zweite Richtung senkrecht zueinander verlaufen.

7. Computerprogrammprodukt, das, wenn es von wenigstens einem Rechner (22a, 4a) implementiert wird, Codeanweisungen für die Durchführung eines Verfahrens nach einem der vorhergehenden Ansprüche umfasst.

8. System zur Erkennung eines Risikos der Beschädigung einer Struktur (1), umfassend:
• wenigstens einen Sensor (21), der dazu ausgebildet ist, eine Vielzahl von Proben von Schwingungsmessungen der Struktur zu erfassen,
• eine Verarbeitungseinheit (22, 3, 4), die dazu ausgebildet ist, das Verfahren nach einem der Ansprüche 1 bis 6 zu implementieren.

9. System nach Anspruch 8, wobei die Verarbeitungseinheit (22, 3, 4) umfasst:
• eine erste (22) und eine zweite Recheneinheit (4), wobei die zweite Recheneinheit (4) eine Fernberechnungseinheit ist,
• wobei die erste Recheneinheit (22) dazu ausgebildet ist:
• aus der Vielzahl der während der festgelegten Dauer erfassten Proben eine ausgewählte Probe auszuwählen, die für den Zustand der Struktur repräsentativ ist, und zwar nach einem Kriterium der geringsten Energie, wobei die ausgewählte Probe eine geringere Energie aufweist als die anderen Proben der Vielzahl von Proben,
∘ Berechnen des Fourier-Transformationsmoduls der ausgewählten Probe,
∘ Zerlegen des Fourier-Transformationsmoduls der ausgewählten Probe in einen Satz von Funktionen, die für Frequenzspitzen höchster Amplitude repräsentativ sind, wobei jede repräsentative Funktion eine Mittenfrequenz hat,
o Übertragen wenigstens der Mittenfrequenz jeder repräsentativen Funktion von Frequenzspitzen höchster Amplitude aus dem Satz, für jede ausgewählte Probe,
• wobei die zweite Fernberechnungseinheit (4) dazu ausgebildet ist:
∘ für jede ausgewählte Stichprobe wenigstens die Mittenfrequenz jeder Funktion zu empfangen, die repräsentativ für Frequenzspitzen höchster Amplitude des Satzes ist,
∘ ein Risiko der Beschädigung der Struktur zu erkennen, wenn die Mittenfrequenz einer der repräsentativen Funktionen einer der Eigenfrequenzen der Struktur entspricht und eine Frequenzänderung mit einem Wert oberhalb eines vorbestimmten Schwellenwerts aufweist, bevorzugt für eine bestimmte Dauer.

## Claims

1. A method for determining a risk of damage to a structure, where the method is implemented by a system comprising at least one sensor suited for acquiring vibration measurements from the structure and a processing unit, and comprising the following steps:
• selecting (S100), from a plurality of samples acquired during a set time, a selected sample representative of the state of the structure, according to a lowest energy criterion, where the selected sample has a lower energy than that of the other samples from the plurality of samples;
• calculating the modulus of the Fourier transform of the selected sample;
• decomposing (S200) the modulus of the Fourier transform of the selected sample into a set of functions representative of the highest amplitude frequency peaks, where each representative function has a center frequency;
• detecting (S400) a risk of damage to the structure when the center frequency of one of the representative functions corresponds to one of the eigenfrequencies of the structure and has a frequency variation with a value over a preset threshold, preferably for a set time.

2. The method according to claim 1, wherein the representative functions are Gaussian functions.

3. The method according to one of the previous claims, wherein the step of selecting a sample representative of the state of the structure comprises, for each sample acquired during the preset time, the calculation of the modulus of the Fourier transform of each acquired sample, the integration of the signal representative of the modulus of the Fourier transform over a preset frequency band and the selection of the sample for which the integral of said signal is minimal.

4. The method according to one of the previous claims, wherein the method further comprises a step of calculating the eigenfrequencies of the structure from the set of functions representative of the highest amplitude frequency peaks.

5. The method according to one of the previous claims, wherein the method further comprises a step of sending (S300) the center frequency of each function representative of the highest amplitude frequency peaks to a remote calculation unit and the step of detecting a risk of damage to the structure is implemented by the remote calculation unit.

6. The method according to one of the previous claims, wherein the sensor comprises at least two geophones suited for acquiring vibration velocity measurements for the structure along a first and a second direction, respectively, where the two geophones are positioned such that the first and second directions are perpendicular.

7. A computer program product comprising, when it is implemented by a processor (22a, 4a), code instructions for implementing the method according to any of the preceding claims.

8. A system for detecting a risk of damage to a structure (1) comprising:
• at least one sensor (21) suited for acquiring a plurality of vibration measurement samples from the structure,
• a processing unit (22, 3, 4) configured for implementing the method according to any of claims 1 to 6.

9. The system according to claim 8, wherein the processing unit (22, 3, 4) comprises:
• a first (22) and a second calculation unit (4), where the second calculation unit (4) is a remote calculation unit;
• where the first calculation unit (22) is configured for:
• selecting from the plurality of samples acquired during the set time, a selected sample representative of the state of the structure, according to a lowest energy criterion, where the selected sample has a lower energy than that of the other samples from the plurality of samples;
o calculating the modulus of the Fourier transform of the selected sample;
o decomposing the modulus of the Fourier transform of the selected sample into a set of functions representative of the highest amplitude frequency peaks, where each representative function has a center frequency;
o sending the center frequency of each function representative of the highest amplitude frequency peaks from the set, for each selected sample;
• where the second remote calculation unit (4) is configured for
o receiving the center frequency of each function representative of the highest amplitude frequency peaks from the set, for each selected sample;
o detecting a risk of damage to the structure when the center frequency of one of the representative functions corresponds to one of the eigenfrequencies of the structure and has a frequency variation with a value over a preset threshold, preferably for a set time.
